# EUROPÄISCHE PATENTSCHRIFT

(11) **EP 3 126 650 B1**
(45) Veröffentlichungstag und Bekanntmachung des Hinweises auf die Patenterteilung: **10.10.2018**
(21) Anmeldenummer: 15712101.3
(22) Anmeldetag: 19.03.2015
(51) Int. Cl.: F02C 9/18, F01D 25/14, F23R 3/00, F23R 3/06, F23R 3/34, F23C 7/02

(54) **GASTURBINENANLAGE**
GAS TURBINE PLANT
INSTALLATION DE TURBINE A GAZ

(30) Priorität: 31.03.2014 DE 102014206018
(43) Veröffentlichungstag der Anmeldung: 08.02.2017
(73) Patentinhaber: Siemens Aktiengesellschaft, 80333 München (DE)
(72) Erfinder: BÖTTCHER, Andreas, 40822 Mettmann (DE); JUHNKE, Shahrzad, 47199 Duisburg (DE); KLUGE, Andre, 48249 Dülmen (DE); KOCK, Boris Ferdinand, 40878 Ratingen (DE); KRIEGER, Tobias, 46147 Oberhausen (DE)
(86) Internationale Anmeldenummer: PCT/EP2015/055765
(87) Internationale Veröffentlichungsnummer: WO 2015/150088

(56) Entgegenhaltungen:
- EP-A1- 0 731 316
- US-A- 5 226 278
- US-B2- 8 091 364

## Beschreibung

Die Erfindung betrifft eine Gasturbinenanlage eines Kraftwerks mit einem Verdichter, mit einer an diesen gekoppelten Turbine und einer Ringbrennkammer.

Gasturbinenanlagen weisen üblicherweise einen Verdichter und eine Turbine auf, die aneinander mittels einer gemeinsamen Welle gekoppelt sind. Zwischen dem Verdichter und der Turbine ist eine Brennkammer angeordnet, innerhalb derer eine Verbrennung von gasförmigem Brennstoff unter Zugabe von mittels des Verdichters verdichteter Luft erfolgt. Das auf diese Weise entstehende Abgas dehnt sich in der Turbine aus, was zu einer Rotationsbewegung dieser führt. An die Welle ist ferner ein Generator gekoppelt, mittels dessen elektrische Energie erzeugt wird. Um eine vergleichsweise effiziente Verbrennung zu gewährleisten, ist die Brennkammer als Ringbrennkammer ausgeführt. Mit anderen Worten ist die Brennkammer rotationssymmetrisch um die den Verdichter mit der Turbine koppelnden Welle angeordnet.

Im Teillastbetrieb der Gasturbinenanlage gelangt weniger Brennstoff in die Brennkammer, was zu einer verringerten Brenntemperatur führt. Aufgrund der verringerten Temperatur wird der vorhandene Brennstoff, üblicherweise ein Kohlenstoff enthaltendes Gas, nicht vollständig zu Kohlendioxid reduziert. Es verbleibt somit ein vergleichsweise großer Anteil von Kohlenmonoxid in dem Abgas der Gasturbinenanlage. Folglich ist der Wirkungsgrad der Gasturbinenanlage im Teillastbetrieb reduziert. Sofern gesetzliche Vorgaben bezüglich des Kohlenmonoxidanteils innerhalb des Abgases bestehen, beispielsweise darf ein Grenzwert von 10 ppm nicht überschritten werden, muss der Betreiber einer Gasturbinenanlage diese entweder abschalten oder die Gasturbinenanlage mit einer Leistungsanforderung betreiben, die die tatsächliche Anforderung übersteigt. Die überschüssig geleistete Arbeit wird hierbei nicht genutzt. US5226278 und US8091364 zeigen Gasturbinenanlagen gemäß dem Stand der Technik. Der Erfindung liegt die Aufgabe zugrunde, eine Gasturbinenanlage eines Kraftwerks anzugeben, die vergleichsweise effizient betreibbar ist. Eine weitere Aufgabe der Erfindung ist die Angabe eines Verfahrens zum Betrieb einer Gasturbinenanlage eines Kraftwerks.
Erfindungsgemäß wird die Aufgabe hinsichtlich der Gasturbinenanlage durch die Merkmale des Anspruchs 1 und hinsichtlich des Verfahrens durch die Merkmale des Anspruchs 8 gelöst. Vorteilhafte Weiterbildungen und Ausgestaltungen sind Gegenstand der Unteransprüche.
Die Gasturbinenanlage, auch als Gasturbine bezeichnet, weist einen Verdichter und eine Turbine auf, die miteinander gekoppelt sind. Insbesondere ist der Verdichter nach Art eines Axialverdichters mit einer im Betrieb rotierenden Welle ausgebildet, wobei diese Welle in die Welle der Turbine übergeht oder einstückig mit dieser ist. Zwischen dem Verdichter und der Turbine ist strömungstechnisch eine Ringbrennkammer angeordnet, die zumindest einen Brenner aufweist. Zweckmäßigerweise umfasst die Ringbrennkammer eine Anzahl derartiger Brenner. Der Brenner weist insbesondere eine Zuflussleitung zur Bereitstellung von Brennstoff auf. Mittels des Brenners wird die mittels des Verdichters verdichtete Luft erwärmt und/oder zur Verbrennung des Brennstoffs herangezogen, wobei ein Abgas gebildet wird, das der Turbine zugeführt wird. Unter Luft wird hierbei insbesondere Umgebungsluft, aber auch aufbereitete Umgebungsluft, beispielsweise gefilterte oder behandelte Umgebungsluft mit einem erhöhten Sauerstoffanteil, und ferner auch im Wesentlichen reiner Sauerstoff verstanden. Im Weiteren wird unter Luft im Wesentlichen insbesondere jedes gasförmige Oxidationsmittel verstanden, das innerhalb der Gasturbinenanlage, im Speziellen innerhalb der Ringbrennkammer, mit dem zugeführten Brennstoff eine exotherme chemische Reaktion ausführt.

Die Gasturbinenanlage weist ferner eine Bypass-Leitung auf, mittels derer der Brenner überbrückt ist. Mit anderen Worten ist die Bypass-Leitung parallel zu dem Brenner geschaltet, wobei die Bypass-Leitung vorgesehen und eingerichtet ist, mit verdichteter Luft beaufschlagt zu werden. Die Bypass-Leitung weist hierfür einen Zugang auf, der stromaufwärts des Brenners an den Verdichter, an die Ringbrennkammer oder an etwaige strömungstechnisch dazwischen angeordnete Bauteile gekoppelt ist, die im Betrieb die mittels des Verdichters verdichtete Luft führen. Der Auslass der Bypass-Leitung hingegen ist stromabwärts des Brenners angeordnet und mündet insbesondere in der Ringbrennkammer oder in sonstigen strömungstechnisch vor der Turbine angeordneten Bauteilen, innerhalb derer das im Betrieb mittels des Brenners erzeugte Abgas der Turbine zugeführt ist.

Mit anderen Worten wird mittels der Bypass-Leitung verdichtete Luft um den Brenner herumgeführt, so dass diese nicht an der Verbrennung teilnimmt oder nicht von der Verbrennung direkt erwärmt wird. Zusammenfassend ist der Verdichter pneumatisch mit der Turbine über die den Brenner aufweisenden Ringbrennkammer verbunden, wobei mittels der Bypass-Leitung eine parallele Verbindung von dem Verdichter zu der Turbine bereitgestellt ist, die frei von dem Brenner ist.

Mittels der Bypass-Leitung ist es ermöglicht, die dem Brenner zugeführte Luft zu reduzieren. Dadurch kann das Verhältnis des Brennstoffs zur bereitgestellten Luftmasse beeinflusst und so insbesondere Bezug auf einen Teillastbetrieb der Gasturbine mit verringertem Brennstoffdurchsatz genommen werden. Geeigneterweise wird das Verhältnis des mittels des Brenners verbrannten Brennstoffs zu der hierfür bereitgestellten Luftmasse über im Wesentlichen alle Leistungsanforderungen konstant oder zumindest innerhalb eines bestimmten Wertebereichs gehalten. Auf diese Weise ist die Brenntemperatur, mittels derer der Brennstoff verbrannt wird, im Wesentlichen auf einen gleichbleibenden Wert eingestellt und eine Emission von Kohlenmonoxid unterbunden oder zumindest reduziert. Aufgrund der Einleitung der mittels der Bypass-Leitung um den Brenner geführten Luft strömungstechnisch vor der Turbine, wird die in diesem Teil der verdichteten Luft gespeicherte Energie zurückgewonnen und somit der Wirkungsgrad der Gasturbinenanlage nicht verringert.
Die Gasturbinenanlage ist Bestandteil eines Kraftwerks, mittels dessen elektrischer Strom bereitgestellt wird. Beispielweise ist die Gasturbinenanlage Bestandteil eines Gas-Dampfturbinen-Kraftwerks. Insbesondere ist die Maximalleistung der Gasturbinenanlage größer oder gleich 250 MW und insbesondere größer oder gleich 295 MW. Die Maximaldrehzahl, mittels der die Welle der Turbine betrieben wird, ist zweckmäßigerweise größer als 1500 Umdrehungen pro Minute und beispielsweise kleiner als 5000 Umdrehungen pro Minute. Insbesondere ist die Drehzahl zwischen 2500 und 3500 Umdrehungen pro Minute.

Die Bypass-Leitung mündet in einer Ringnut, die in ein strömungstechnisch zwischen dem Brenner und der Turbine angeordnetes Bauelement eingebracht ist, z. B. in dieses gefräst ist. Insbesondere ist dieses Bauelement um die Welle der Turbine angeordnet, und die Ringnut ist rotationssymmetrisch bezüglich der Welle. Auf diese Weise ist ein bezüglich der Welle im Wesentlichen rotationssymmetrisches Einströmen der komprimierten Luft und folglich ein rotationssymmetrischer Temperaturverlauf des Bauelements ermöglicht. Aufgrund der nutenförmigen Ausbildung der Ringnut ist ein Entstehen von Turbulenzen innerhalb des das Abgas führenden Bauelements vermieden, die den Wirkungsgrad der Gasturbinenanlage schmälern könnten.
Zweckmäßigerweise ist die Ringnut mittels eines Blechs abgedeckt. Beispielsweise ist zwischen dem Blech und der Ringnut ein Schlitz gebildet, durch den die komprimierte Luft in das die Nut aufweisende Bauelement strömt. Besonders bevorzugt jedoch ist die Ringnut, insbesondere im Wesentlichen vollständig, mittels des Blechs abgedeckt. Das Blech weist eine Anzahl von Öffnungen auf, und zwischen dem Blech und der Ringnut ist kein Schlitz gebildet. Vielmehr liegt das Blech auf den Kanten der Ringnut oder deren Begrenzungen auf. Folglich strömt die verdichtete Luft durch die Öffnungen in das die Ringnut aufweisende Bauelement. Mittels geeigneter Positionierung und Dimensionierung der Öffnungen ist somit ein geeigneter Strömungsverlauf der verdichteten Luft innerhalb des Bauelements ermöglicht. Zweckmäßigerweise ist das Material des Blechs das gleiche Material des Bauelements im Bereich der Ringnut. Auf diese Weise ist eine Verspannung aufgrund unterschiedlicher Wärmeausdehnungskoeffizienten der Materialien bei Erwärmung der Gasturbinenanlage ausgeschlossen, die anderweitig zu einer Zerstörung des Bauelements führen könnte.

Beispielsweise ist die Ringnut in die Ringbrennkammer eingebracht. Mit anderen Worten ist das die Ringnut aufweisende Bauelement die Ringbrennkammer. Auf diese Weise ist ein Nachrüsten einer bereits bestehenden Gasturbinenanlage durch Austausch der Ringbrennkammer ermöglicht. Zudem ist auf diese Weise eine vergleichsweise effiziente Vermischung zwischen dem Abgas und der mittels der Bypass-Leitung um den Brenner herum geleiteten Luft vergleichsweise effizient, bevor mittels der Turbine die hierin gespeicherte Energie extrahiert wird.

Zweckmäßigerweise ist die Ringnut in die Ringbrennkammer gefräst, so dass bereits bestehende Ringbrennkammern umgerüstet werden können. Hierbei ist insbesondere die Ringnut mittels des Blechs abgedeckt, das aus dem gleichen Material der Ringbrennkammer besteht. Insbesondere handelt es sich bei der Ringbrennkammer um ein Gussteil. Zum Beispiel umfasst die Ringbrennkammer eine Außenschale und eine Innenschale, wobei die Innenschale die nabenseitige Begrenzung der Ringbrennkammer darstellt. Die Außenschale hingegen begrenzt die Ringbrennkammer in radialer Richtung nach außen. Beispielsweise weist die Außenschale die Ringnut auf, die entlang des Umfangs in die Außenschale eingebracht und der Innenschale zugewandt ist. Bei einer derartigen Positionierung der Ringnut ist eine Beaufschlagung dieser mit der verdichteten Luft vergleichsweise einfach. Alternativ hierzu weist die Innenschale die Ringnut auf, die ebenfalls entlang deren Umfang in diese eingebracht ist. Auf diese Weise ist zusätzlich eine Isolierung der innerhalb der Innenschale angeordneten Welle von dem mittels des Brenners erhitzten Abgas ermöglicht. Zweckmäßigerweise weist die Bypass-Leitung einen Schlitz auf, der auf der Nabenseite der Ringbrennkammer in diese, insbesondere in die Innenschale, eingebracht ist. Der Schlitz verläuft insbesondere axial und mündet geeigneterweise in die Ringnut. Zum Beispiel ist der Schlitz auf der dem Verdichter zugewandten Seite der Ringnut angeordnet. Auf diese Weise ist eine vergleichsweise einfache Beaufschlagung der Ringnut mit der verdichteten Luft mittels Einleiten der verdichteten Luft in den Schlitz ermöglicht. Zweckmäßigerweise ist der Schlitz mit einem Blech abgedeckt, so dass ein unkontrolliertes Ausströmen der verdichteten Luft aus dem Schlitz in die Brennkamer unterbunden ist. Vielmehr wird die verdichtete Luft im Wesentlichen vollständig der Ringnut zugeführt.

Die Ringnut ist mittels Hitzekacheln abgedeckt, die insbesondere aus einer Keramik hergestellt sind. Folglich ist eine thermische Belastung der Ringnut und des die Ringnut aufweisenden Bauelements aufgrund des vergleichsweise heißen Abgases reduziert. Zweckmäßigerweise ist die Ringnut mittels des Blechs abgedeckt, und das Blech wiederum mittels der Hitzekacheln, was einerseits ein kontrolliertes Ausströmen der Luft aus der Ringnut ermöglicht und andererseits die thermische Belastung des Blechs reduziert. Hierbei sind die Hitzekacheln insbesondere zueinander beabstandet, so dass ein Hindurchströmen der Luft zwischen den Hitzekacheln hindurch ermöglicht ist.
Besonders bevorzugt weist die Gasturbinenanlage zwei derartige Ringnuten auf. Auf diese Weise ist das Einströmverhalten der verdichteten Luft in den Abgasstrom des Brenners verbessert und ein Wärmeaustausch zwischen diesen effizienter. Besonders bevorzugt weist hierbei die Ringbrennkammer die beiden Ringnuten auf. Hierbei ist eine der Ringnuten in die Außenschale und die andere in die Innenschale eingebracht. Somit ist das vergleichsweise heiße Abgas von beiden Schalen mittels der über die Bypass-Leitung geführten und verdichteten Luft beabstandet, was die thermische Belastung der Ringbrennkammer verringert. Zudem ist es aufgrund der beiden Ringnuten ermöglicht, einen vergleichsweise kleinen Querschnitt für die Ringnuten zu wählen, wobei das mittels der Bypass-Leitung um den Brenner herumgeführte Luftvolumen vergleichsweise groß ist.

Alternativ hierzu weist entweder die Innenschale oder die Außenschale die beiden Ringnuten auf, wobei diese axial zueinander beabstandet sind. Besonders bevorzugt sind zumindest drei Ringnuten vorhanden, wobei zwei von diesen entweder in die Innenschale oder die Außenschale eingebracht sind, und die verbliebene Schale die weitere Ringnut aufweist. Auf diese Weise ist es ermöglicht, ein vergleichsweise großes Luftvolumen um den Brenner herumzuleiten, und somit auch bei vergleichsweise geringen Leistungsanforderungen an die Gasturbinenanlage eine hohe Temperatur im Bereich des Brenners zu gewährleisten, was zu vergleichsweise geringen Kohlenmonoxidemissionen führt.

Zweckmäßigerweise weist die Gasturbinenanlage eine Steuerschaltung und ein Ventil auf, die miteinander signaltechnisch gekoppelt sind. Mit anderen Worten ist im Betrieb das Ventil mit Steuerbefehlen der Steuerschaltung beaufschlagt. Das Ventil selbst ist Bestandteil der Bypass-Leitung, so dass mittels des Ventils das durch die Bypass-Leitung strömende Luftvolumen eingestellt werden kann. Folglich ist es mittels der Steuerschaltung möglich, die Temperatur, bei der der Brennstoff verbrannt wird, innerhalb der Brennkammer zu regeln. Bei geöffnetem Ventil wird nämlich die Temperatur erhöht, wohingegen bei einem geschlossenen Ventil die Temperatur erniedrigt ist. Zweckmäßigerweise ist die Steuerschaltung vorgesehen und eingerichtet, das Ventil in Abhängigkeit einer Leistungsanforderung an die Gasturbinenanlage zu betätigen.

Das Verfahren dient dem Betrieb einer Gasturbinenanlage mit einem Verdichter, einer einen Brenner aufweisenden Ringbrennkammer und einer Turbine, die strömungstechnisch miteinander gekoppelt sind. Die Gasturbinenanlage weist ferner eine Bypass-Leitung zur Überbrückung des Brenners auf. Die Bypass-Leitung wird in Abhängigkeit einer Leistungsanforderung an die Gasturbinenanlage mit verdichteter Luft beaufschlagt, die aus einem strömungstechnisch zwischen dem Verdichter und dem Brenner gelegenen Bereich entnommen wird. Hierbei ist die Menge der entnommenen Luft bei einer hohen Leistungsanforderung gering und bei einer niedrigen Leistungsanforderung hoch. Die in der Bypass-Leitung geführte Luft wird in Strömungsrichtung hinter dem Brenner in den mittels des Brenners erzeugten Abgasstrom eingeleitet und folglich der Turbine zugeführt. Auf diese Weise wird die in der verdichteten Luft vorhandene Energie rückgewonnen. Insbesondere im Volllastbetrieb der Gasturbinenanlage ist die mittels der Bypass-Leitung um den Brenner herumgeführten Luftmenge gleich null. Zweckmäßigerweise erfolgt die Einstellung des mittels der Bypass-Leitung um den Brenner herumgeleiteten verdichteten Luftvolumens mittels des Ventils, wobei dieses hierfür mittels eines Steuerbefehls beaufschlagt wird. Geeigneterweise wird der Steuerbefehl mittels der Steuerschaltung erstellt.

Nachfolgend werden Ausführungsbeispiele der Erfindung anhand einer Zeichnung näher erläutert. Darin zeigen:
- FIG 1: Schematisch vereinfacht eine Gasturbinenanlage,
- FIG 2: perspektivisch ausschnittsweise die Gasturbinenanlage,
- FIG 3: in einer Schnittdarstellung ausschnittsweise eine Ringbrennkammer mit einer Innen- und einer Außenschale,
- FIG 4: ausschnittsweise perspektivisch die Innenschale,
- FIG 5: in einer Schnittdarstellung ausschnittsweise eine weitere Ausführungsform der Innenschale, und
- FIG 6: schematisch ein Verfahren zum Betrieb der Gasturbinenanlage.

Einander entsprechende Teile sind in allen Figuren mit den gleichen Bezugszeichen versehen.

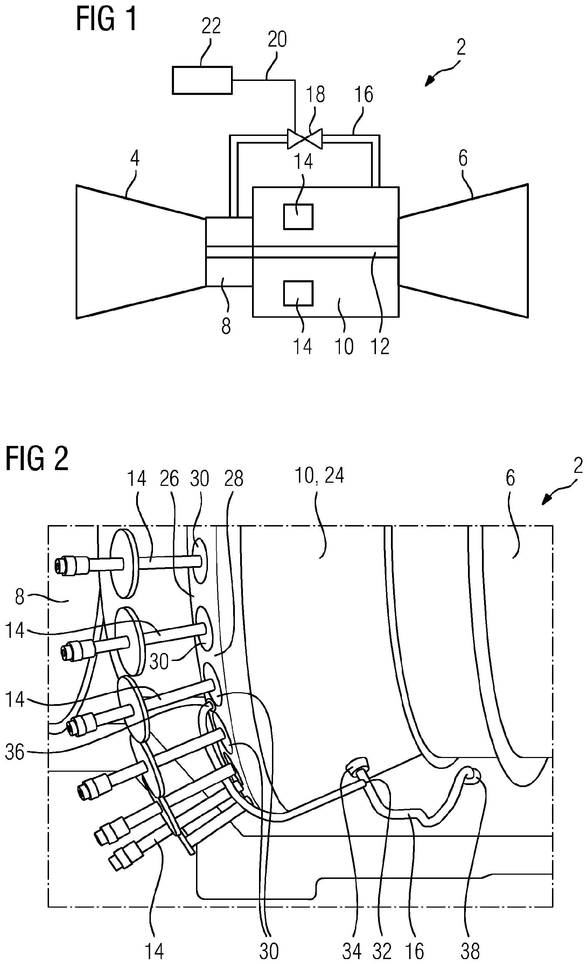

In FIG 1 ist eine Gasturbinenanlage 2 mit einem Verdichter 4 und einer Turbine 6 schematisch vereinfacht dargestellt, wobei strömungstechnisch zwischen diesen beiden eine Luftzufuhr 8 und eine Ringbrennkammer 10 angeordnet sind. Der Verdichter 4 ist mittels einer Welle 12 mit der Turbine 6 gekoppelt, wobei die Welle 12 einen hier nicht dargestellten Generator zur Erzeugung elektrischer Energie antreibt. Die Welle 12 ist innerhalb des Zentrums der Ringbrennkamer 12 angeordnet, die eine Anzahl von Brennern 14 aufweist. Zudem weist die Gasturbinenanlage 2 eine Bypass-Leitung 16 mit einem Ventil 18 auf, die von der Luftzufuhr 8 zur Überbrückung der Brenner 14 abzweigt und in den zwischen den Brennern 14 und der Turbine 6 gebildeten Bereich der Ringbrennkammer 10 in diese mündet. Das Ventil 18 ist mittels einer Steuerleitung 20 mit einer Steuerschaltung 22 signaltechnisch gekoppelt.

Bei Betrieb der Gasturbinenanlage 2 tritt Luft, die beispielsweise gekühlt oder mit Sauerstoff angereichert wurde, durch den Verdichter 4 in die Gasturbinenanlage 2 ein und wird dort verdichtet, sodass die in der Luftzufuhr 8 vorhandene Luft einen im Vergleich zur Umgebung erhöhten Druck aufweist. Diese Luft wird in die Ringbrennkammer 10 eingeleitet, in die zudem über die Brenner 14 ein Brennstoff gelangt. Der Brennstoff reagiert unter Ausbildung von einem Abgas mit der bereitgestellten verdichteten Luft, was zu einer Erhöhung der Temperatur des Abgases im Vergleich zu der Temperatur der sich in der Luftzufuhr 8 befindenden verdichteten Luft führt. Das Abgas gelangt in die Turbine 6, mittels derer die thermische Energie in kinetische Energie, nämlich eine Rotationsbewegung der Welle 12, umgewandelt wird.

Im Teillastbetrieb der Gasturbinenanlage 2 wird das Ventil 18 mittels der Steuerschaltung 22 derart angesteuert, dass Luft aus der Luftzufuhr 8 mittels der Bypass-Leitung 16 entnommen wird. Diese Luft wird um die Brenner 14 herumgeleitet und der Ringbrennkammer 10 in einem Bereich zugeführt, in dem die chemische Reaktion des Brennstoffes mit der verdichteten Luft bereits abgeschlossen ist. Dort vermischt sich die an den Brenner 14 vorbeigeleitete Luft mit dem Abgas, das aufgrund der Verbrennung entstanden ist, und wird der Turbine 6 zugeführt. Aufgrund der verringerten Luftzufuhr zu den Brennern 14 ist die Temperatur innerhalb der Ringbrennkammer 10 erhöht, was eine Ausbildung von Kohlenmonoxid verringert.

FIG 2 zeigt perspektivisch ausschnittsweise die Gasturbinenanlage 2 mit der Ringbrennkammer 10, die an die Turbine 6 gekoppelt ist. Auf der der Turbine 6 abgewandten Seite der Ringbrennkammer 10 befindet sich die Luftzufuhr 8. Die Ringbrennkammer 10 weist eine Außenschale 24 und eine Innenschale 26 auf, die eine im Wesentlichen radial verlaufende Stirnwand 28 umfasst. Die Stirnwand 28 weist eine Anzahl von in Umfangsrichtung gleichmäßig angeordneten Bohrungen 30 auf, innerhalb derer jeweils einer der Brenner 14 angeordnet ist. Hierbei ist zwischen jedem der Brenner 14 und der Begrenzung der jeweils zugeordneten Bohrung 30 ein Schlitz gebildet, durch den die verdichtete Luft in die Ringbrennkammer 10 eintritt. Die Bypass-Leitung 16 weist eine Abzweigung 32 auf, die einen ersten Anschluss 34, einen zweiten Anschluss 36 und einen dritten Anschluss 38 strömungstechnisch miteinander verbindet. Der dritte Anschluss 38 führt in nicht näher dargestellter Weise zu dem Ventil 18 und von dort zu der strömungstechnischen Verbindung zwischen der Bypass-Leitung 16 und der Luftzufuhr 8. Der erste Anschluss 34 ist in die Außenschale 24 und der zweite Anschluss 36 in die Innenschale 26 eingebracht.

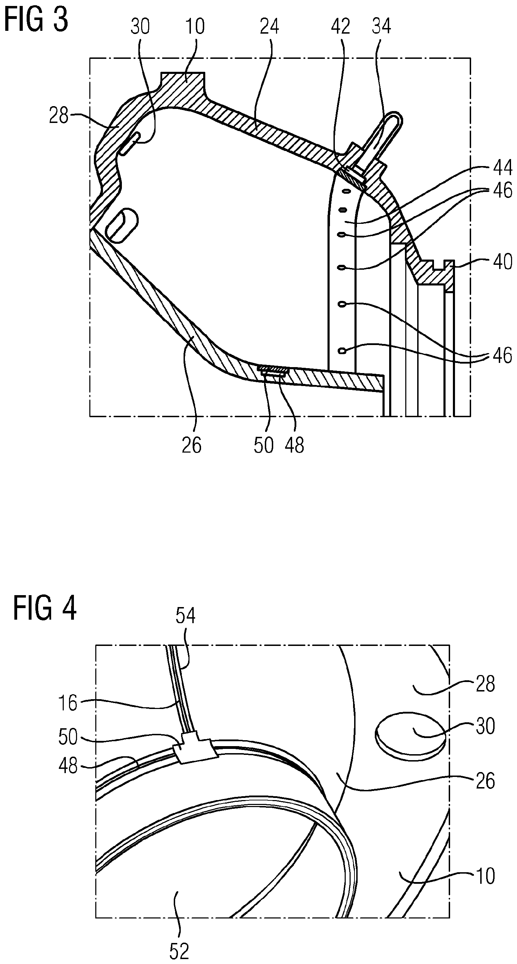

In FIG 3 ist in einer Schnittdarstellung entlang der Welle 12 die Ringbrennkammer 10 dargestellt, wobei von dem Schnitt lediglich der sich auf einer der Seiten der Welle 12 befindende Teil gezeigt ist. Ferner ist keiner der Brenner 14 und ebenfalls nicht die Turbine 6 dargestellt, die im Montagezustand an einem der Stirnwand 28 gegenüberliegenden Terminal 40 befestigt ist. Die Ringbrennkammer 10 weist eine erste Ringnut 42 auf, die in die Außenschale 24 gefräst ist. Die erste Ringnut 42 verläuft entlang des Umfangs der Außenschale 24 und ist sowohl in Richtung der Innenschale 26 gerichtet als auch zwischen der Stirnwand 28 und dem Terminal 40 angeordnet. In die erste Ringnut 42 endet die Bypass-Leitung 16 über den ersten Anschluss 34. Auf der der Innenschale 26 zugewandten Seite der ersten Ringnut 42 ist diese mittels eines ringförmigen Blechs 44 vollständig abgedeckt, das eine Anzahl von Öffnungen 46 aufweist. Die Öffnungen 46 sind entlang des Umfangs des Blechs 44 verteilt, sodass ein Einströmen der Luft aus der ersten Ringnut 42 in die Brennkammer 10 im Wesentlichen entlang des vollständigen Umfangs der Außenschale 24 erfolgt. Das Blech 44 ist aus dem gleichen Material der Außenschale 24 erstellt, und weist folglich den gleichen Wärmeausdehnungskoeffizienten auf. Das Blech 44 liegt zudem in einer entsprechenden Ausnahme bündig ein, sodass die Innenseite der Außenschale 24 im Bereich der ersten Ringnut 42 im Wesentlichen plan ist.

Die Innenschale 26 weist eine zweite Ringnut 48 auf, die in gleicher Weise wie die erste Ringnut 42 mittels eines Blechs 50 abgedeckt ist, das ebenfalls, hier nicht dargestellte, Öffnungen aufweist. Das Material des Blechs 50 entspricht dem der Innenschale 26 und das Blech 50 fluchtet mit der Innenschale 26. Die zweite Ringnut 48 ist im Vergleich zur ersten Ringnut 42 in Richtung der Stirnwand 28 versetzt. Infolgedessen findet eine Vermischung der durch die zweite Ringnut 48 in die Ringbrennkammer 10 eintretenden Luft mit dem mittels des Brenners 30 erzeugten Abgas vor der Vermischung des Abgases mit der über die zweite Ringnut 42 eintretenden komprimierten Luft statt.

In FIG 4 ist perspektivisch ausschnittsweise die Innenschale 26 mit der Stirnwand 28 gezeigt. Die Innenschale 26 weist eine zentrale Aussparung 52 auf, innerhalb derer im Montagezustand der Gasturbinenanlage 2 die Welle 12 angeordnet ist. Zwischen der Stirnwand 28 und der zweiten Ringnut 48 erstreckt sich ein axial verlaufender Schlitz 54 der Bypass-Leitung 16, der die zweite Ringnut 48 strömungstechnisch mit dem zweiten Anschluss 36 verbindet. Im Montagezustand ist der Schlitz 54 ebenfalls mittels des nur ausschnittsweise gezeigten Blechs 50 abgedeckt, wobei im Bereich des Schlitzes 54 keine Öffnungen vorhanden sind. Somit strömt die mittels des zweiten Anschlusses 36 in den Schlitz 54 eingebrachte verdichtete Luft in die zweite Ringnut 48 und von dieser aus im Wesentlichen gleichmäßig um den Umfang der Innenschale 26 verteilt in die Ringbrennkammer 10.

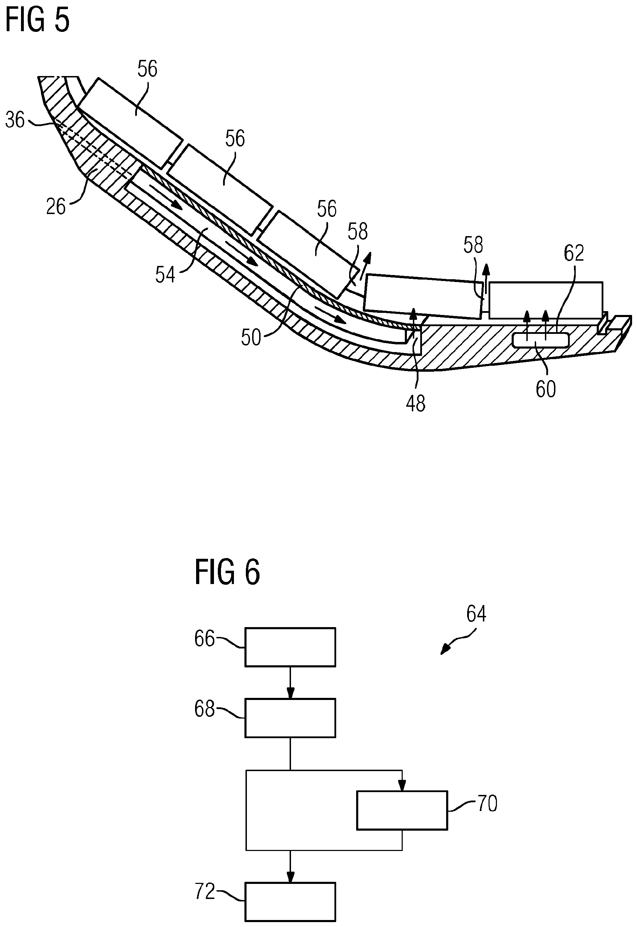

In FIG 5 ist in einer Schnittdarstellung parallel zur Welle 12 eine weitere Ausführungsform der Innenschale 26 mit dem axial verlaufenden Schlitz 54 dargestellt. Auch hier verbindet der mit dem Blech 50 abgedeckte axiale Schlitz 54 den zweiten Anschluss 36 mit der zweiten Ringnut 48. Ferner sind Hitzekacheln 56 dargestellt, mittels derer die Innenseite der Ringbrennkammer 10 ausgekleidet ist. Die aus einer Keramik hergestellten Hitzekacheln 56 decken das Blech 50 ab und verringern eine thermische Belastung des Blechs 50 aufgrund der vergleichsweise hohen Brenntemperatur von bis zu 1.400 °C. Zwischen benachbarten Hitzekacheln 56 sind Spalte 58 gebildet, durch die die verdichtete Luft der zweiten Ringnut 48 zu dem Abgas geführt wird. An der Außenschale 24 sind ebenfalls die Hitzekacheln 56 angebunden, ebenso wie bei dem in FIG 3 und 4 erläuterten Ausführungsbeispiel, bei dem die Hitzekacheln 56 jedoch nicht dargestellt sind.

Im Vergleich zum vorhergehenden Ausführungsbeispiel weist die in FIG 5 zeigte Ausführungsform eine dritte Ringnut 60 auf, die parallel zu der zweiten Ringnut 48 verläuft. Hierbei ist die dritte Ringnut 60 axial zu der zweiten Ringnut 48 beabstandet und von der Stirnwand 28 weg versetzt, sodass diese im Wesentlichen in axialer Richtung auf der gleichen Höhe wie die erste Ringnut 42 verläuft. Auch die dritte Ringnut 60 ist in bereits erläuterter Art und Weise mittels eines Blechs 62 abgedeckt und mittels eines weiteren, hier nicht gezeigten Schlitzes mit der Bypass-Leitung 16 verbunden. Hierfür weist die Bypass-Leitung 16 eine weitere Abzweigung 32 und einen vierten Anschluss auf.

In FIG 6 ist ein Verfahren 64 zum Betrieb der Gasturbinenanlage 2 schematisch dargestellt. In einem ersten Schritt 66 wird eine Leistungsanforderung an die Gasturbinenanlage 2 ermittelt. In einem anschließenden zweiten Schritt 68 wird die zu der Leistungsanforderung korrespondierende Menge an Brennstoff festgelegt. Mit anderen Worten wird ermittelt, wie viel Brennstoff erforderlich ist, um die Gasturbinenanlage 2 entsprechend der Leistungsanforderung zu betreiben. Hierbei wird auch die Menge an Luft bestimmt, die zur Erreichung der Leistungsanforderung erforderlich ist, wobei ein bestimmtes Verhältnis des Brennstoffs zur bereitgestellten Luftmasse eingehalten wird. Sofern die erforderliche Luftmenge geringer ist als die Luftmenge, die bei geschlossenem Ventil 18 mittels des Verdichters 4 in der Luftzufuhr bereitgestellt wird, wird in einem dritten Schritt 70 das Ventil 18 mit einem mittels der Steuerschaltung 22 bereitgestellten Steuerbefehls beaufschlagt, sodass das Ventil 18 zumindest teilweise geöffnet ist.

Der Grad der Öffnung des Ventils 18 ist hierbei derart gewählt, dass die mittels der Bypass-Leitung 16 um den Brenner 14 herumgeführte Luftmenge der Differenz der mittels des Verdichters 4 bereitgestellten Luftmenge und die für den Betrieb des Brenners 14 benötigten Luftmenge entspricht. Sofern die in der Luftzufuhr 8 bereitgestellte Luftmenge vollständig für den Betrieb des Brenners 14 verwendet wird, unterbleibt der dritte Schritt 70. In einem sich daran anschließenden vierten Schritt 72 wird das Verfahren 64 beendet.
Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen.

## Patentansprüche

1. Gasturbinenanlage (2) eines Kraftwerks, mit einem Verdichter (4), mit einer einen Brenner (14) aufweisenden Ringbrennkammer (10) und mit einer Turbine (6), die an den Verdichter (4) gekoppelt ist, sowie mit einer den Brenner (14) überbrückenden und strömungstechnisch parallel zu diesem geschalteten Bypass-Leitung (16) für verdichtete Luft, wobei die Bypass-Leitung (16) in einer Ringnut (42, 48, 60) mündet,
**dadurch gekennzeichnet, dass** die Ringnut (42, 48, 60) mittels Hitzekacheln (56) abgedeckt ist.

2. Gasturbinenanlage (2) nach Anspruch 1,
**dadurch gekennzeichnet, dass** die Ringnut (42, 48, 60) mittels eines eine Anzahl von Öffnungen (46) aufweisenden Blechs (44, 50, 62) abgedeckt ist.

3. Gasturbinenanlage (2) nach einem der vorhergehenden Ansprüche,
**dadurch gekennzeichnet, dass** die Ringnut (42, 48, 60) in die Ringbrennkammer (10) eingebracht ist.

4. Gasturbinenanlage (2) nach einem der vorhergehenden Ansprüche,
**dadurch gekennzeichnet, dass** die Bypass-Leitung (16) einen auf der Nabenseite der Ringbrennkammer (10) eingebrachten axialen Schlitz (54) aufweist.

5. Gasturbinenanlage (2) nach einem der vorhergehenden Ansprüche,
**gekennzeichnet durch** mindestens zwei derartige Ringnuten (42, 48, 60).

6. Gasturbinenanlage (2) nach Anspruch 5,
**dadurch gekennzeichnet, dass** die Ringbrennkammer (10) eine Außenschale (24) und eine nabenseitige Innenschale (26) umfasst, wobei jede Schale (24, 26) eine der Ringnuten (42, 48, 60) aufweist.

7. Gasturbinenanlage (2) nach einem der Ansprüche 1 bis 6,
**dadurch gekennzeichnet, dass** die Bypass-Leitung (16) ein mit einer Steuerschaltung (22) signaltechnisch gekoppeltes Ventil (18) aufweist.

8. Verfahren (64) zum Betrieb einer Gasturbinenanlage (2) nach Anspruch 7, bei dem in Abhängigkeit einer Leistungsanforderung die Bypass-Leitung (16) mit Luft beaufschlagt wird, **dadurch gekennzeichnet, dass** insbesondere das Ventil (18) mit einem Steuerbefehl beaufschlagt wird.

## Claims

1. Gas turbine system (2) of a power plant, having a compressor (4), an annular combustion chamber (10) comprising a burner (14), and a turbine (6) which is coupled to the compressor (4), and having a bypass line (16) for compressed air bypassing the burner (14) and connected flow-wise in parallel therewith, wherein the bypass line (16) opens in an annular groove (42, 48, 60), **characterized in that** the annular groove (42, 48, 60) is covered by means of thermal tiles (56).

2. Gas turbine system (2) according to Claim 1,
**characterized in that** the annular groove (42, 48, 60) is covered by means of a plate (44, 50, 62) comprising a number of openings (46).

3. Gas turbine system (2) according to one of the preceding claims,
**characterized in that** the annular groove (42, 48, 60) is introduced into the annular combustion chamber (10).

4. Gas turbine system (2) according to one of the preceding claims,
**characterized in that** the bypass line (16) comprises an axial slot (54) introduced on the hub side of the annular combustion chamber (10).

5. Gas turbine system (2) according to one of the preceding claims,
**characterized by** at least two such annular grooves (42, 48, 60) .

6. Gas turbine system (2) according to Claim 5,
**characterized in that** the annular combustion chamber (10) comprises an outer shell (24) and a hub-side inner shell (26), wherein each shell (24, 26) comprises one of the annular grooves (42, 48, 60).

7. Gas turbine system (2) according to one of Claims 1 to 6,
**characterized in that** the bypass line (16) comprises a valve (18) coupled for signaling to a control circuit (22).

8. Method (64) for operating a gas turbine system (2) according to Claim 7, in which, as a function of power demand, the bypass line (16) is supplied with air, **characterized in that** in particular the valve (18) is supplied with a control command.

## Revendications

1. Installation (2) de turbine à gaz d'une centrale électrique, comprenant un compresseur (4), une chambre de combustion (10) ayant un brûleur (14) et une turbine (6), qui est reliée au compresseur (4), ainsi qu'un conduit (16) de dérivation pour de l'air comprimé, court-circuitant le brûleur (14) et monté, en technique des fluides, en parallèle à celui-ci, le conduit (16) de dérivation débouchant dans une rainure (42, 48, 60) annulaire, **caractérisée en ce que** la rainure (42, 48, 60) annulaire est recouverte de carreaux (56) résistant à la chaleur.

2. Installation (2) de turbine à gaz suivant la revendication 1,
**caractérisée en ce que** la rainure (42, 48, 60) annulaire est recouverte au moyen d'une tôle (44, 50, 62) ayant un certain nombre d'ouvertures (46).

3. Installation (2) de turbine à gaz suivant l'une des revendications précédentes,
**caractérisé en ce que** la rainure (42, 48, 60) annulaire est ménagée dans la chambre de combustion (10) annulaire.

4. Installation (2) de turbine à gaz suivant l'une des revendications précédentes,
**caractérisé en ce que** le conduit (16) de dérivation a une fente (54) axiale ménagée du côté du moyeu de la chambre de combustion (10) annulaire.

5. Installation (2) de turbine à gaz suivant l'une des revendications précédentes,
**caractérisée par** au moins deux rainures (42, 48, 60) annulaires de ce genre.

6. Installation (2) de turbine à gaz suivant la revendication 5,
**caractérisée en ce que** la chambre de combustion (10) annulaire comprend une coque (24) extérieure et une coque (26) intérieure du côté du moyeu, chaque coque (24, 26) ayant l'une des rainures (42, 48, 60) annulaire.

7. Installation (2) de turbine à gaz suivant l'une des revendications 1 à 6,
**caractérisée en ce que** le conduit (16) de dérivation a une soupape (18) reliée en technique du signal à un circuit (22) de commande.

8. Procédé (64) pour faire fonctionner une installation (2) de turbine à gaz suivant la revendication 7, dans lequel on alimente en air le conduit (16) de dérivation en fonction d'une demande de puissance, **caractérisé en ce que** l'on applique notamment à la soupape (18) une instruction de commande.
